# EUROPEAN PATENT APPLICATION

(11) **EP 2 077 644 A1**
(43) Date of publication of application: **08.07.2009**
(21) Application number: 09002294.8
(22) Date of filing: 19.08.2005
(51) Int. Cl.: H04L 12/46

(54) **Roaming method and system in location information system**

(30) Priority: 13.09.2004 US 608903 P; 21.09.2004 KR 20040075683; 23.10.2004 KR 20040085140
(62) Divisional of application: 05781205.9
(71) Applicant: LG Electronics Inc., Seoul 150-010 (KR)
(72) Inventor: Shim, Dong-Hee, Seoul, 150-853 (KR)
(74) Representative: Katérle, Axel

(57) **Abstract**

A roaming method and system using a SUPL (Secure User Plane Location)-based location information system, are provided. According to an aspect of the present invention, the method can include the steps of establishing a transmission control protocol (TCP) connection between a target terminal and a visited network associated with the target terminal, if position information of the target terminal is requested; and obtaining, by the target terminal or a location server in the visited network, the position information of the target terminal, through the established TCP connection and without a TCP connection between the target terminal and a home network of the target terminal.

## Description

### Technical Field

The present invention relates to a mobile communication system and, more particularly to a roaming method and system using a SUPL (Secure User Plane Location)-based location service in a location information system.

### Background Art

In general, a wireless communication system provides a location service for supplying the location of a mobile terminal to a certain entity periodically or according to a request, by including a relevant function part for calculating the location of the mobile terminal in a network.

A location service-related network structure varies according to an internal network structure such as 3GPP or 3GPP2. Methods for calculating the current location of a mobile terminal include a cell-ID method for transferring an ID of a cell to which the mobile terminal belongs, a method for measuring the time taken for radio waves of the mobile terminal to reach each base station and calculating the location of the mobile terminal by using the trigonometric measurement, and a method for using a global positioning system (GPS).

In order to provide the location service to a user, a considerable amount of signaling and location information needs to be communicated between the mobile terminal and a location server. Recently, standard positioning technologies for providing the location service, namely, a location service based on a location of a mobile terminal, have been rapidly spreading. The technologies can be generally provided through a user plane (user-data processed plane) or a control plane (network plane).

A SUPL (Secure User Plane Location) method is one of the technologies, which provides the location service through the user plane. The SUPL method is an effective method of transferring location information required for calculating the location of a mobile terminal. That is, in order to provide assistance information such as GPS assistance and in order to bear a position technology-related protocol between the mobile terminal and the network, the SUPL method uses a user plane data bearer.

In a general location information system, the SUPL network for providing the location service includes a SUPL agent, a SUPL location platform (SLP), and a SUPL enabled terminal (SET). The SUPL agent is a logical service access point that uses the actually measured location information and can be an entity that requests the location of the SET. The SLP is a SUPL service access part of a network for accessing network resources to obtain location information, and can be a server. The SET is a device which can communicate with the SUPL network using a SUPL interface. For example, the SET can be a UE (User Terminal) of a UMTS, a MS (Mobile Station) of GSM, a MS of IS-95, a laptop computer having a SET function, or a PDA (personal digital assistant). In the alternative, the SET can be various mobile terminals which are connected through a WLAN (Wireless Local Area Network). The SET supports definition procedures in the SUPL by interworking with the network through the user plane bearer. A network for which a user has initially registered is called a home network, and when the user moves or roams to an area other than the home network area, the network of that other area is called a visited (or visited) network. A SLP in the home network is called a H-SLP (home-SLP) while a SLP in the visited network is called a V-SLP (visited-SLP).

When a SUPL procedure starts in the network, a SLP to which an external client is first connected is called a R-SLP (requesting-SLP). The R-SLP is a logical entity, which can be the same as the H-SLP or not. A SET aimed at to track its current location is called a target SET.

A roaming method in a location information system according to a related art is as follows.

When a SUPL service is provided through a direct connection with the visited network in order to calculate a location of a target SET currently roamed to a visited network, the target SET sets a TCP (transmission control protocol) connection with its home network and receives an address of the visited network from the home network through the TCP connection. While maintaining the TCP connection with the home network, the target SET also sets a TCP connection with the visited network by using the address of the visited network and calculates its location.

Accordingly, in the related art roaming method of the location information system, in order to receive the SUPL service, the target SET must maintain two TCP connections, one with the home network and at the same time with the visited network. In addition, while the procedure for calculating the location of the target SET is performed through the direct connection between the visited network and the target SET, the home network must continuously maintain the TCP connection with the target SET. Thus, the related art SUPL roaming method has problems in that the use efficiency of the TCP resource of the home network is degraded, the connection complexity of the system is increased, and signaling burden on the system is increased.

### Disclosure of Invention

### Technical Problem

Accordingly, an object of the present invention is to provide a method and system for providing a location service to a roaming terminal, which overcome the limitations and disadvantages associated with the related art.

Another object of the present invention is to provide a roaming terminal, method and system in a location information system capable of reducing a signaling burden of a target terminal (target SET) by allowing a SLP (SUPL Location Platform) of a visited network to perform a resource management function for setting and releasing a SUPL session as well as to manage a positioning function for calculating the location of the target terminal, so that the target terminal does not need to simultaneously maintain a TCP connection (secure IP connection) with the home network of the target terminal and another TCP connection with the visited network.

Another object of the present invention is to provide a roaming method and system in a location information system, wherein in case of providing a SUPL service through a direct connection between a visited network and a target terminal, the target terminal establishes a TCP connection with a home network, releases it, and then, sets a TCP connection with the visited network, so that the target terminal can receive the SUPL service from the visited network without simultaneously maintaining two TCP connections while the SUPL procedure is performed.

Yet another object of the present invention is to provide a roaming method and system in a location information system, wherein in case of providing a SUPL service through a direct connection between a visited network and a target terminal, a location of the target terminal is calculated by establishing a direct connection with a SUPL position center for calculating an actual current location of the target terminal in the visited network without having a proxy entity.

Yet another object of the present invention is to provide a roaming method and system in a location information system, wherein the position information of a target terminal in a visited network is obtained by establishing a TCP connection between the target terminal and the visited network without a TCP connection between the target terminal and a home network of the target terminal.

### Technical Solution

To achieve at least the above objects in whole or in parts, there is provided according to an aspect of the present invention a SUPL roaming method in a SUPL-based location information system, wherein a first TCP connection between a target terminal and a home network is released and a second TCP connection is established between the target terminal and a visited network to thereby performing a procedure for calculating a location of the target terminal through the second TCP connection.

To achieve at least these advantages in whole or in parts, there is further provided according to another aspect of the present invention a roaming method of a SUPL-based location information system including: informing, by an H-SLC, a target SET about an address of a V-SPC for calculating location information of the target SET through a first TCP connection and releasing the first TCP connection, when the location information of the target SET is requested; establishing a second TCP connection between the target SET and the V-SPC by using the address of the V-SPC; calculating a location of the target SET through interworking between the V-SPC and the target SET through the second TCP connection; and transmitting, by the V-SPC, the calculated location information of the target SET to the H-SLC and releasing the second TCP connection.

To achieve at least these advantages in whole or in parts, there is further provided according to another aspect of the present invention a SUPL roaming method in a SUPL-based location information system having a SUPL agent, an R-SLP, an H-SLC, a V-SPC and a target SET, including: requesting, by the SUPL agent, location information of the target SET from the R-SLP according to an MLP communication method; transmitting, by the R-SLP, the MLP SLIR message to the H-SLC to which the target SET belongs according to an RLP communication method; checking, by the H-SLC, whether the target SET supports the SUPL function or whether the target SET is located in a roaming service area; transmitting, by the H-SLC, a SUPL INIT message to the target SET if the target SET supports the SUPL function and belongs to the roaming service area, to start a SUPL procedure with the target SET and set a first TCP connection; transmitting, by the target SET, a SUPL START message to the H-SLC to inform about starting of the SUPL procedure; determining, by the H-SLC, a V-SLC where the target SET is currently located based on the received SUPL START message and transferring the SUPL START message to the V-SLC through an RLP SSRLIR message; informing, by the V-SLC, the V-SPC that a SUPL POS procedure preparation is going to be ready through an internal initialization between the V-SLC and the V-SPC and transmitting, by the V-SPC, an IP address and port number information of the V-SPC to the V-SLC; transmitting, by the V-SLC, the IP address and the port number of the V-SPC to the H-SLC; transmitting, by the H-SLC, the IP address and the port number of the V-SPC and a session ID of the first TCP connection to the target SET, and then releasing the first TCP connection; transmitting, by the target SET, a SUPL POS INIT message to the V-SPC corresponding to the IP address and the port number, to establish a second TCP connection with the V-SPC; transmitting, by the V-SPC, the session ID of the second TCP connection to the target SET to release the second TCP connection when the position of the target SET is calculated; transmitting, by the V-SPC, the calculated target SET location information to the V-SLC through internal communication, and transmitting, by the V-SLC, the target SET location information to the H-SLC; transmitting, by the H-SLC, the target SET location information to the R-SLP according to an RLP communication method; and transmitting, by the R-SLP, the target SET location information to the SUPL agent according to the MLP communication method.

To achieve at least these advantages in whole or in parts, there is further provided according to another aspect of the present invention a SUPL roaming method in a SUPL-based location information system having a SUPL agent, an R-SLP, an H-SLC, a V-SPC and a target SET, including: requesting, by the SUPL agent, location information of the target SET from the R-SLP according to an MLP communication method; transmitting, by the R-SLP, the MLP SLIR message to the H-SLC to which the target SET belongs according to an RLP communication method; checking, by the H-SLC, whether the target SET supports the SUPL function or whether the target SET is located in a roaming service area; requesting, by the H-SLC, an address of the V-SPC from the V-SLC of the roaming service area; informing, by the V-SLC, the V-SPC that a SUPL POS procedure preparation will start and transmitting, by the V-SPC, an IP address and port number information of the V-SPC to the V-SLC; transmitting, by the V-SLC, the IP address and port number of the V-SPC to the H-SLC; transmitting, by the H-SLC, the IP address and the port number of the V-SPC through a SUPL INIT message and a session ID of the first TCP connection to the target SET to start the SUPL procedure, and releasing the first TCP connection; transmitting, by the target SET, a SUPL POS INIT message to the V-SPC corresponding to the IP address and the port number, to set a second TCP connection with the V-SPC; transmitting, by the V-SPC, the session ID of the second TCP connection to the target SET to release the second TCP connection when the position of the target SET is calculated; transmitting, by the V-SPC, the calculated target SET location information to the V-SLC through internal communication, and transmitting, by the V-SLC, the target SET location information to the H-SLC; transmitting, by the H-SLC, the target SET location information to the R-SLP according to an RLP communication method; and transmitting, by the R-SLP, the target SET location information to the SUPL agent according to the MLP communication method.

To achieve at least these advantages in whole or in parts, there is further provided according to another aspect of the present invention a SUPL roaming method in a SUPL-based location information system having a V-SLP (Visited-SLP) having a V-SLC and a V-SPC, an H-SLP (Home-SLP) having an H-SLC, and a target SET, including: transmitting, by the target SET, a SUPL START message to the H-SLC to set a first TCP connection and start a SUPL procedure; determining, by the H-SLC, a V-SLP where the target SET is currently located based on the received SUPL START message and transferring the SUPL START message to the V-SLC through an RLP SRLIR message; informing, by the V-SLC, the V-SPC that a SUPL POS procedure preparation will start through an internal initialization, and transmitting, by the V-SPC, an IP address and port number of the V-SPC to the V-SLC through the internal initialization; transmitting, by the V-SLC, the IP address and the port number of the V-SPC to the H-SLC; transmitting, by the H-SLC, the IP address and the port number of the V-SLP and a session ID of the first TCP connection to the target SET, and releasing the first TCP connection; transmitting, by the target SET, a SUPL POS INIT message a V-SPC corresponding to the IP address and the port number to establish a second TCP connection with the V-SPC; transmitting, by the V-SPC, a session ID of the second TCP connection to the target SET to release the second TCP connection, when a location calculation procedure of the target SET is performed through the second TCP connection; and transmitting, by the V-SPC, the calculated location information of the target SET to the -SLC through internal communication, and transmitting, by the V-SLC, location information of the target SET to the H-SLC through an RLP-SSRP message.

To achieve at least these advantages in whole or in parts, there is further provided according to another aspect of the present invention a SUPL roaming system in a SUPL-based location information system providing a SUPL service through a direct connection between a visited network and a target SET, including: an H-SLP for transmitting V-SLP-related information for calculating location information of the target SET to the target SET through a first TCP connection when location information of the target SET is requested, and releasing the first TCP connection; a V-SLP for establishing a second TCP connection with the target SET, performing a procedure for calculating a location of the target SET through the second TCP connection, and then releasing the second TCP connection; and the target SET for releasing the first TCP connection, establishing the second TCP connection, and then, releasing the second TCP connection.

According to another aspect of the present invention, there is provided a method of obtaining position information of a target terminal, the method comprising: establishing a transmission control protocol (TCP) connection between the target terminal and a visited network associated with the target terminal, if position information of the target terminal is requested; and obtaining, by the target terminal or a location server in the visited network, the position information of the target terminal, through the established TCP connection and without a TCP connection between the target terminal and a home network of the target terminal.

According to another aspect of the present invention, there is provided a method for obtaining location information of a SUPL (secure user plane location) enabled terminal, the method comprising: receiving, by a target terminal, a SUPL initiate message from a home location server of the target terminal, the SUPL initiate message including address information of a visited location server associated with the target terminal; establishing a transmission control protocol (TCP) connection with the visited location server based on the received address information; and conducting a session with the visited location server through the established TCP connection to obtain position information of the target terminal.

According to another aspect of the present invention, there is provided a roaming method for a secure user plane location (SUPL) enabled terminal, the method comprising: establishing a transmission control protocol (TCP) connection with a home location server of a target terminal, obtaining address information of a visited location server associated with the target terminal through the TCP connection, and then releasing the TCP connection with the home location server; and establishing a TCP connection with the visited location server based on the obtained address information after the TCP connection with the home location server is released, obtaining position information of the target terminal through the TCP connection with the visited location server, and then releasing the TCP connection with the visited location server.

According to another aspect of the present invention, there is provided a system for obtaining position information of a target terminal, the system comprising: a target terminal; a home network associated with the target terminal; and a visited network to which the target terminal roams and including a location server, wherein a transmission control protocol (TCP) connection is established between the target terminal and the visited network, if position information of the target terminal is requested, and the target terminal or the location server in the visited network obtains the position information of the target terminal, through the established TCP connection and without a TCP connection between the target terminal and the home network.

According to another aspect of the present invention, there is provided a secure user plane location (SUPL) enabled terminal comprising: at least one processor configured to receive a SUPL initiate message from a home location server of the terminal, the SUPL initiate message including address information of a visited location server associated with the terminal, to establish a transmission control protocol (TCP) connection with the visited location server based on the received address information, and to conduct a session with the visited location server through the established TCP connection for obtaining position information of the terminal.

According to another aspect of the present invention, there is provided a secure user plane location (SUPL) enabled terminal comprising: at least one processor configured to establish a transmission control protocol (TCP) connection with a home location server of the terminal, to obtain address information of a visited location server associated with the terminal through the TCP connection, and then to release the TCP connection with the home location server; and thereafter to establish a TCP connection with the visited location server based on the obtained address information, to obtain position information of the terminal through the TCP connection with the visited location server, and then to release the TCP connection with the visited location server.

According to another aspect of the present invention, there is provided a SUPL (secure user plane location) roaming method in a SUPL-based location information system including a target SET (SUPL enabled terminal), a SUPL agent, a R-SLP (requesting SUPL location platform), a H-SLC (home SUPL location center) in a home network of the target SET, a V-SLC (visited SUPL location center) in a visited network of the target SET, and a V-SPC (visited SUPL positioning center) in the visited network of the target SET, the method comprising: transmitting a MLP (mobile location protocol) SLIR (standard location immediate request) message from the SUPL agent to the R-SLP to request location information of the target SET; transmitting a RLP (roaming location protocol) SRLIR (SUPL roaming location immediate request) message from the R-SLP to the H-SLC; checking, by the H-SLC, whether the target SET supports a SUPL function and whether the target SET is located in a roaming service area; transmitting a RLP SSRLIR (standard SUPL roaming location immediate request) message from the H-SLC to the V-SLC to request address information of the V-SPC of the roaming service area; conducting an internal initialization through communication between the V-SLC and the V-SPC to inform the V-SPC that a SUPL POS (positioning) procedure preparation will start, and transmitting address and port number information of the V-SPC from the V-SPC to the V-SLC through internal communication; transmitting a RLP answer message responding to the RLP SSRLIR message from the V-SLC to the H-SLC, the RLP answer message including the address and port number information of the V-SPC; transmitting a SUPL INIT (initiate) message from the H-SLC to the target SET, the SUPL INIT message including the address and port number information of the V-SPC, and a session identification; performing a data connection set up by the target SET; transmitting a SUPL POS INIT message from the target SET to the V-SPC using the received address and port number information, so as to establish a communication connection between the target SET and the V-SPC; conducting internal communication between the V-SPC and the V-SLC; conducting the SUPL POS procedure through the communication connection established between the target SET and the V-SPC and thereby calculating the location information of the target SET; and transmitting a SUPL END message from the V-SPC to the target SET and thereby releasing the communication connection between the target SET and the V-SPC.

According to another aspect of the present invention, there is provided a SUPL (secure user plane location) roaming method in a SUPL-based location information system including a target SET (SUPL enabled terminal), a H-SLC (home SUPL location center) in a home network of the target SET, a V-SLC (visited SUPL location center) in a visited network of the target SET, and a V-SPC (visited SUPL positioning center) in the visited network of the target SET, the method comprising: conducting a data setup by the target SET; transmitting a SUPL START message from the target SET to the H-SLC, the SUPL START message including a session identification; checking routing information associated with the target SET by the H-SLC; transmitting a RLP (roaming location protocol) SRLIR (SUPL roaming location immediate request) message from the H-SLC to the V-SLC to request address information of the V-SPC; conducting an internal initialization through communication between the V-SLC and the V-SPC to inform the V-SPC that a SUPL POS (positioning) procedure preparation will start, and transmitting address and port number information of the V-SPC from the V-SPC to the V-SLC through internal communication; transmitting a RLP answer message responding to the RLP SSRLIR message from the V-SLC to the H-SLC, the RLP answer message including the address and port number information of the V-SPC; transmitting a SUPL RESPONSE message from the H-SLC to the target SET, the SUPL INTT message including the address and port number information of the V-SPC, and a session identification; transmitting a SUPL POS INIT message from the target SET to the V-SPC using the received address and port number information so as to establish a communication connection between the target SET and the V-SPC; conducting internal communication between the V-SPC and the V-SLC; conducting the SUPL POS procedure through the communication connection established between the target SET and the V-SPC and thereby calculating location information of the target SET; and transmitting a SUPL END message from the V-SPC to the target SET and thereby releasing the communication connection between the target SET and the V-SPC.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### Description of Drawings

The invention will be described in detail with reference to the following drawings in which like reference numerals refer to like elements wherein:
Figure 1 illustrates a SUPL roaming method when a SLP of a network starts a SUPL procedure in accordance with the present invention;
Figure 2 illustrates one example of the SUPL roaming method of Fig. 1 with details in accordance with the present invention;
Figure 3 illustrates another example of a SUPL roaming method when a SLP of a network starts a SUPL procedure in accordance with the present invention;
Figure 4 illustrates a SUPL roaming method when a target SET starts a SUPL procedure in accordance with an embodiment of the present invention; and
Figure 5 illustrates one example of the SUPL roaming method of Fig. 4 with details in accordance with the present invention.

### Mode for Invention

In the present invention, the term 'visited' is intended to encompass 'visiting'.

The present invention provides a method of allowing a visited network in which a user is currently located, to receive a SUPL service during roaming in a SUPL-based location information system. The visited network is a network to which a target terminal has roamed and is currently located, and is not the home network of the target terminal. In the present invention, a SLP of the visited network of a target terminal performs a resource management function for setting and releasing a SUPL session as well as a positioning function for calculating a location of the target terminal, whereby after a terminal of a user establishes and releases a first TCP connection (secure IP connection) with a home network, a second TCP connection (secure IP connection) with the visited network is established and released, so that the terminal of the user can receive the SUPL service from the visited network without having to maintain two TCP connections simultaneously. In a variation thereof, the visited network may provide the SUPL service to the roamed terminal without needing the first TCP connection with the home network of the terminal.

According to the present invention, if a TCP connection is established between the target terminal and the home network or between the target terminal and the visited network, then communications between those components are generally made through the established TCP connection.

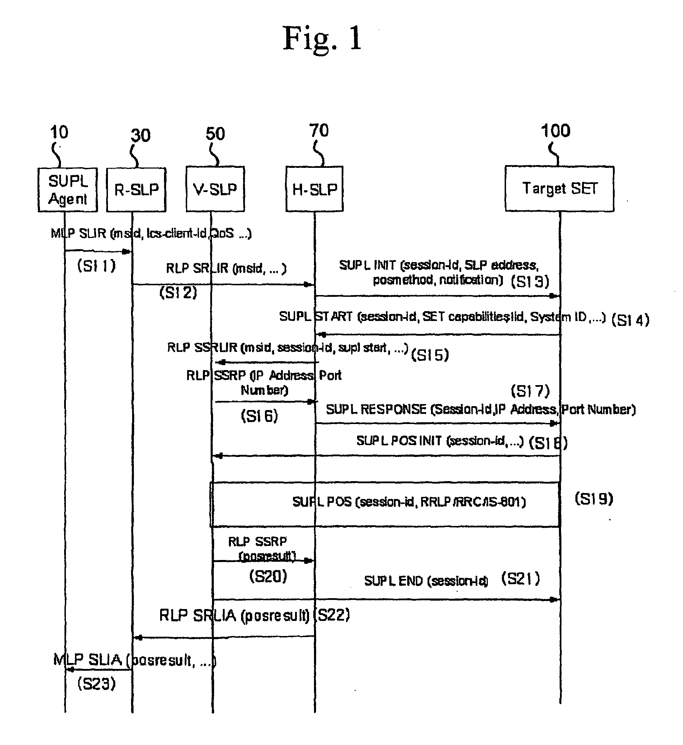

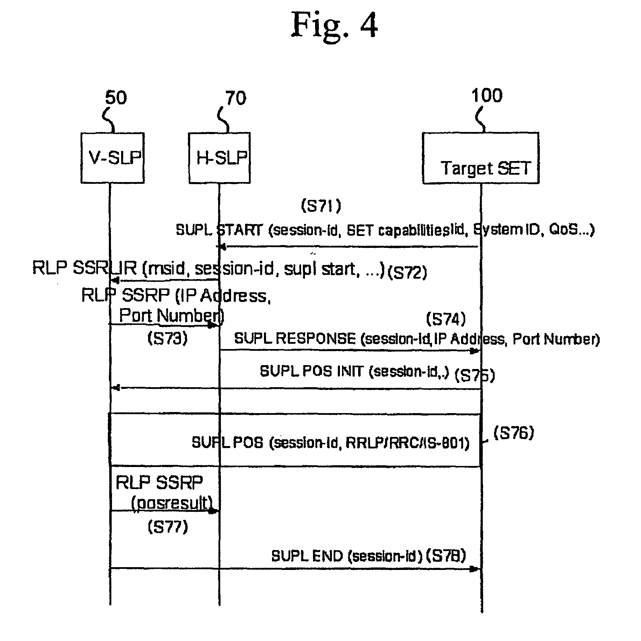

In a general roaming method, in using a SUPL service provided through a direct connection with the visited network, there can be two cases: a case in which a SLP (e.g., a location server) starts a SUPL procedure, and another case in which a SET starts the SUPL procedure. Accordingly, a SUPL roaming method wherein a SLP starts a SUPL procedure according to the present invention will be described below referring to Figs. 1-3, and a SUPL roaming method wherein a SET starts a SUPL procedure according to the present invention will be described below referring to Figs. 4-5.

Figure 1 illustrates a SUPL roaming method when a SLP starts a SUPL procedure in accordance with an embodiment of the present invention. This method is implemented in a system including a SUPL (Secure User Plane Location) agent 10, a R-SLP (Requesting SUPL Location Platform) 30, a V-SLP (Visited SLP) 50, H-SLP (Home SLP) 70, and a target SET (SUPL Enabled Terminal) 100, all operatively coupled. The V-SLP 50 can be a location server in a visited network of the target SET 100, and the H-SLP 70 can be a location server in the home network of the target SET 100. The SUPL agent 10 and the R-SLP 30 can be in one device. The method of Fig. 1 (or other methods of the present invention) can be implemented in other suitable system.

Referring to Fig. 1, when a request entity requests location information of the target SET 100 from the SUPL agent 10, the SUPL agent 10 transmits a MLP (Mobile Location Protocol) SLIR (Standard Location Immediate Request) message to the R-SLP 30 to request the location information of the target SET 100 (step S11). The MLP SLIR message includes at least a target SET ID (msid) identifying the target SET 100, and an ID (lcs-client-id, where lcs stands for location services) of the SUPL agent 10 identifying the SUPL agent 10, but can further include QoS (quality of service) information, etc. The msid can be a phone number, an IP address, or an ID of the target SET 100.

The R-SLP 30 is subject to a SUPL agent authentication procedure by using the received lcs-client-id. For instance, the R-SLP 30 authenticates the SUPL agent 10 and checks if the SUPL agent is authorized to receive the service it requested, based on the received lcs-client id. And then, the R-SLP 30 searches for a H-SLP to which the target SET 100 belongs by verifying the received msid of the target SET 100, and transfers the message received from the SUPL agent 10 (namely, the MLP SLIR message) to the searched H-SLP 70 by using a RLP (Roaming Location Protocol) SRLIR (Standard Roaming Location Immediate Request) message (step S12). That is, the R-SLP 30 transmits the RLP SRLIR message to the H-SLP 70 at step S12.

The H-SLP 70 then transmits a SUPL INIT (SUPL initiate) message to the target SET 100 to start a SUPL procedure with the target SET 100 (step S13). At this time, a TCP connection between the H-SLP 70 and the target SET 100 is established. The SUPL INIT message includes at least an ID (session-id) of a location measurement session (SUPL session), an address of the H-SLP (SLP address), and a positioning method (posmethod) parameter to be used. At the step S11, after a privacy function with respect to the target SET 100 is checked, if a notification with respect to location information is required for the target SET 100, a notification parameter can be included. And if the notification parameter is included in the received SUPL INIT message, the target SET 100 verifies privacy-related regulations previously set by a user and then performs a related procedure.

The target SET 100 informs the start of the location measurement session (SUPL session) by transmitting a SUPL START message to the H-SLP 70 (step S 14). The SUPL START message includes at least an ID (session-id) of the location measurement session, capabilities (SET capabilities) of the target SET 100 (parameter(s) for indicating capability related to the positioning method supported by the target SET 100), a location identifier (lid) (e.g., a base station ID), and a system ID (e.g., a BSC ID or an MSC ID).

The H-SLP 70 determines a V-SLP by checking the system ID included in the SUPL START message received from the target SET 100, and transfers the SUPL START message to the V-SLP 50 through a RLP SSRLIR (Standard SUPL Roaming Location Immediate Request) message (step S15). That is, at the step S15, the H-SLP 70 determines the identity of the V-SLP that the target SET 100 currently is associated with using the SUPL START message, and then transmits the RLP SSRLIR message to that V-SLP 50. The RLP SSRLIR message includes contents of the SUPL START message (supl start) and other information such as the msid, the session-id, etc.

The V-SLP 50 recognizes positioning method(s) supported by the target SET 100 by examining the contents of the RLP SSRLIR message, and transmits a RLP SSRP (Standard SUPL Roaming Position) message to the H-SLP 70 as a response message to the RLP SSRLIR message (step S16). The RLP SSRP message includes an IP address and a port number of the V-SLP 50.

The H-SLP 70 adds the IP address and the port number of the V-SLP 50 received from the V-SLP 50 in the SUPL RESPONSE message, adds the ID (session-id) of the SUPL session for releasing, and then, transmits the SUPL RESPONSE message to the target SET 100. Then, the target SET 100 releases every resource including the TCP connection established with the H-SLP 70 (step S 17). That is, at this time, the TCP connection established between the target SET 100 and the H-SLP 70 is released. In this case, the SUPL RESPONSE message serves substantially as a SUPL END message and can be substituted as a SUPL END message. In this case, the SUPL RESPONSE message must include at least the IP address and the port number of the V-SLP 50 and the ID of the SUPL session.

The target SET 100 recognizes the V-SLP 50 corresponding to the IP address and the port number included in the SUPL RESPONSE message, establishes a TCP connection with the V-SLP 50 and transmits a SUPL POS INIT message (SUPL positioning initiate message) to the V-SLP 50 (step S 18). The SUPL POS INIT message includes, e.g., the session-id, lid, etc.

Then, a positioning procedure (SUPL POS) for calculating a location of the target SET 100 starts between the target SET 100 and the V-SLP 50. The target SET 100 and the V-SLP 50 continuously exchange messages with each other in order to calculate (determine) the location information of the target SET 100. The V-SLP 50 or the target SET 100 can calculate the location of the target SET 100 through the continuously exchanged messages for positioning (step S 19). The exchanged information may include the session-id, positioning protocol information (e.g., RRLP, RRC, TIA-801, etc.), etc. Any known method (e.g., GPS, etc.) can be used to actually measure or determine the location of the target SET 100. As a result, the V-SLP 50 obtains the determined location information of the target SET 100. If the target SET 100 were to calculate the location of the target SET 100, the result can be sent to the V-SLP 50.

When the location of the target SET 100 is calculated, the V-SLP 50 transmits the calculated location information (posresult) of the target SET 100 by using a RLP SSRP message to the H-SLP 70 (step S20), and the V-SLP 50 transmits a SUPL END message to the target SET 100 to inform about the termination of the SUPL procedure (step S21). The order of performing the steps S20 and S21 does not matter. The SUPL END message includes the session ID for releasing the TCP connection established between the target SET 100 and the V-SLP 50. Accordingly, the TCP connection between the V-SLP 50 and the target SET 100 is released at the step S21.

Upon receiving the RLP SSRP message from the V-SLP 50, the H-SLP 70 transmits a RLP SRLIA (Standard Roaming Location Immediate Request Answer) message to the R-SLP 30 as a response to the RLP SRLIR message to transfer the calculated location information (posresult) of the target SET 100 (step S22).

Then, the R-SLP 30 transfers the location information of the target SET 100 to the SUPL agent 10 by using a MLP SLIA message (step S23). That is, the MLP SLIA message includes the location information of the target SET 100 and is an answer message to the MLP SLIR message at the step S 11.

Accordingly, in the SUPL roaming method in accordance with the present invention, when the SLP of the network starts the SUPL procedure, the SLP of the network establishes the TCP connection with the target SET, transmits the IP address and port number of the V-SLP to the target SET, and releases the TCP connection established with the target SET. Then, the V-SLP corresponding to the received IP address and port number and the target SET establish a TCP connection with each other to perform the procedure for calculating the location of the target SET, and thereafter, the V-SLP releases the TCP connection with the target SET, whereby the target SET can receive the SUPL service without having to simultaneously maintain two TCP connections (one with the V-SLP and another with the H-SLP).

In accordance with the present invention, a SLP (namely, the network element) includes a SPC (SUPL Positioning Center), namely, an entity for actually calculating a location of a target terminal (target SET), and a SLC (SUPL Location Center) performing functions other than the functions of the SLP such as calculating the location information of the target terminal. For instance, the SLC performs roaming and resource management. Accordingly, the H-SLP 70 includes a H-SLC (home SLC) 72 and a H-SPC (home SPC) 74, and the V-SLP 50 includes a V-SLC (visited SLC) 52 and a V-SPC (visited SPC) 54. Thus, in order to perform the functions of the H-SLP, internal communication between the H-SLC 72 and the H-SPC 74 are performed, and in order to perform the functions of the V-SLP, internal communication between the V-SLC 52 and the V-SPC 54 are performed.

The present invention considers below the case where the SUPL service is received through the direct connection between the visited network and the target SET, so the H-SPC is excluded. In addition, the present invention proposes a method wherein when the SUPL service is received through the direct connection between the visited network and the target SET, the target SET calculates location information of the target SET through a direct connection with the V-SPC without passing through the V-SLC which performs a proxy entity function.

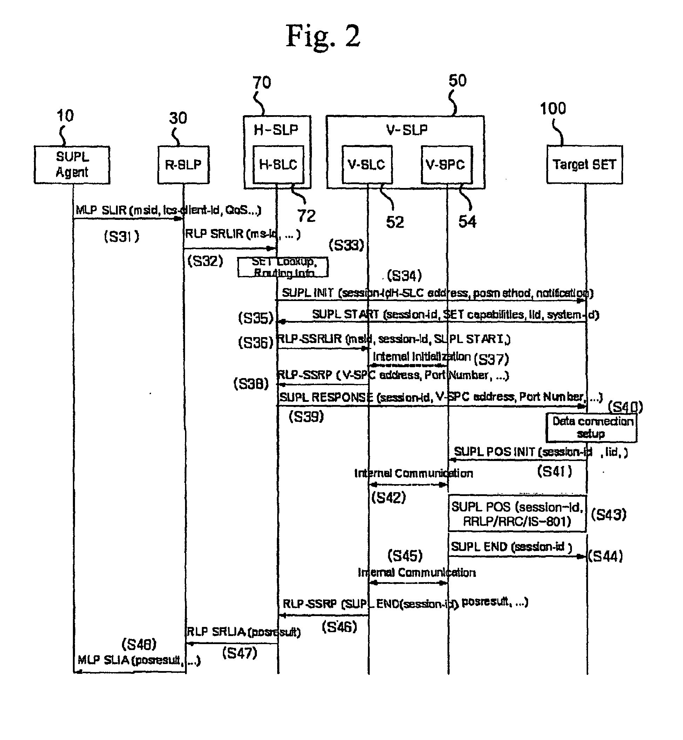

Figure 2 illustrates one example of the SUPL roaming method of Fig. 1 wherein the SLP of the network starts the SUPL procedure.

With reference to Figure 2, when the target SET 100 roams to a visited network including a V-SLC 52 and a V-SPC 54, the target SET 100 establishes a direct connection with the V-SPC 54 which performs the actual location calculation function, the target SET 100 and the V-SPC 54 perform a location calculation procedure of the target SET 100, and the V-SPC 54 exchanges required information with the V-SLC 52 which performs the roaming and resource management functions through internal communication with the V-SPC 54. A H-SLP 70 including a H-SLC 72 is the SLP of the home network of the target SET 100.

Referring to Fig. 2, the operations of the steps S31 and S32 are performed, which are respectively the same as the steps S11 and S12 of Fig. 1. Thus, the detailed descriptions of the step S31 and S32 are omitted. When a RLP SRLIR message is received from the R-SLP 30, the H-SLC 72 of the H-SLP 70 checks whether the target SET 100 corresponding to an ms-id received from the R-SLP 30 belongs to a roaming service area by using routing information, and checks whether the target SET 100 supports the SUPL function or not through a SET (SUPL Enabled Terminal) lookup table (step S33). The H-SLC 72 manages the routing information for determining whether the current target SET belongs to the roaming service area or not, and the SET lookup table for determining whether the SUPL function is supported or not by the current target SET.

If it is determined that the target SET 100 belongs to the roaming service area and supports the SUPL function, the H-SLC 72 transmits the SUPL INIT message to the target SET 100 in order to start the SUPL procedure with the target SET 100 (step S34) and establishes a TCP connection with the target SET 100. The SUPL INIT message includes at least a session ID of a SUPL session for starting the SUPL procedure, an address (H-SLC address) of the H-SLP 70, and a positioning method (posmethod) parameter to be used. In addition, at the step of S31, after a privacy function with respect to the target SET 100 is checked, if a notification with respect to location information is required for the target SET 100, a notification parameter can be included. If the notification parameter is included in the received SUPL INIT message, the target SET 100 verifies privacy-related regulations previously set by a user and then performs a related procedure.

The target SET 100 informs the start of the location measurement session (SUPL session) by transmitting a SUPL START message to the H-SLP 70 (step S35). The SUPL START message includes at least an ID (session-id) of the location measurement session, capabilities (SET capabilities) of the target SET 100 (parameter(s) for indicating capability related to the positioning method supported by the target SET 100), a location identifier (lid) (e.g., an ID of a base station to which the target SET 100 belongs), and a system ID (e.g., an ID of a BSC or an MSC which is providing a service to the target SET).

The H-SLC 72 determines a V-SLC by checking the system ID included in the SUPL START message received from the target SET 100 and transfers the SUPL START message to the determined V-SLC 52 through a RLP SSRLIR (Standard SUPL Roaming Location Immediate Request) message (step S36). The RLP SSRLIR message at the step S36 is the same as the RLP SSRLIR message at the step S 15 in Fig. 1.

The V-SLC 52 of the V-SLP 50 informs that a location calculation procedure (SUPL POS procedure: positioning procedure) preparation will start through internal initialization with the corresponding V-SPC 54, and transmits information required for the location calculation procedure preparation included in the RLP-SSRLIR message to the V-SPC 54. Then, the V-SPC 54 recognizes positioning method(s) supported by the target SET 100 based on the information received from the V-SLC 52 and provides the IP address and the port number of the V-SPC 54 to the V-SLC 52 (step S37).

Then, the V-SLC 52 transmits a RLP-SSRP (Standard SUPL Roaming Position) message to the H-SLC 72 as a response to the RLP-SSRLIR message (step S38). The RLP-SSRP message includes at least the IP address and the port number of the V-SPC 54.

Subsequently, the H-SLC 72 transfers the IP address and port number of the V-SPC 54 received from the V-SLC 52 and the session-id of the TCP connection for releasing its TCP connection with the target SET 100 through a SUPL RESPONSE message (step S39). Thereafter, the target SET 100 releases every resource including the TCP connection established with the H-SLC 72. In this case, the SUPL RESPONSE message serves substantially as a SUPL END message and can be substituted as a SUPL END message. As a result, the SUPL RESPONSE message must include at least the IP address and the port number of the V-SPC 54, and the ID of the SUPL session for releasing the TCP connection between the H-SLP 72 and the target SET 100.

The target SET 100 recognizes the V-SPC 54 corresponding to the IP address and the port number included in the SUPL RESPONSE message received from the H-SLC 72 and prepares for establishing a TCP connection with the recognized V-SPC 54 (step S40). Namely, once the SUPL INIT message is received, the target SET 100 checks whether a packet data network and a data connection have been currently set and established. If the data connection has not been established, the target SET sets up a data connection with the packet data network such as 3GPP or 3GPP2.

Thereafter, the target SET 100 establishes the TCP connection with the recognized V-SPC 54 and transmits a SUPL POS INIT message to the V-SPC 54 (step S41). The SUPL POS INIT message includes the session-id of the set SUPL session and the ID (lid) of the base station to which the target SET 100 belongs. Then, a positioning procedure for calculating the location of the target SET 100 starts between the target SET 100 and the V-SPC 54.

First, the V-SPC 54 and the V-SLC 52 roughly infer location information of the target SET 100 through internal communication with each other (step S42). The rough location information of the target SET 100 can be inferred by using the 'lid', namely, the ID of the base station, received from the target SET 100. If the roughly inferred location information of the target SET 100 satisfies QoS (Quality of Service) according to a request by the SUPL agent 10, the V-SPC 54 does not perform the location calculation procedure (the SUPL POS procedure) (step S43), and immediately transmits a SUPL END message to the target SET 100 to inform about the termination of the SUPL procedure (step S44). The SUPL END message includes the session-id to release the TCP connection between the target SET 100 and the V-SPC 54.

If, however, the roughly inferred location information of the target SET 100 does not satisfy the QoS, the V-SLC 52 and the V-SPC 54 prepare for performing the SUPL POS procedure (step S42). The V-SPC 54 continuously exchanges messages for performing the SUPL POS procedure with the target SET 100. The V-SPC 54 or the target SET 100 calculates the location of the target SET 100 through the continuously exchanged messages for positioning (step S43). In this way, the V-SPC 54 obtains the location information of the target SET 100.

When the location of the target SET 100 is obtained, the V-SPC 54 transmits the SUPL END message to the target SET 100 to inform about termination of the SUPL procedure (step S44). The SUPL END message includes the session ID for releasing the TCP connection established between the target SET 100 and the V-SPC 54. Accordingly, the TCP connection between the V-SPC 54 and the target SET 100 is released. In addition, the V-SPC 54 transmits the calculated location information of the target SET 100 to the V-SLC 52 through the internal communication with the V-SLC 52 (step S45).

Then, the V-SLC 52 transmits a RLP-SSRP message to the H-SLC 72, and the RLP-SSRP message includes the SUPL END message and the calculated location information (posresult) of the target SET 100 (step S46).

The H-SLC 72 then transmits a RLP SRLIA message to the R-SLP 30 as a response to the RLP SRLIR message to transfer the calculated location information of the target SET 100 (step S47), and the R-SLP 30 transfer the location information of the target SET 100 to the SUPL agent 10 by using the MLP SLIA message (step S48).

Thus, in performing the procedure for calculating the location of the target SET through the direct connection between the target SET and the V-SPC, when the SLP of the network starts the SUPL procedure, it establishes the TCP connection with the target SET, receives an ID of a system to which the target SET belongs through the set SUPL session, recognizes the corresponding V-SLC by using the system ID, receives the IP address and port number information of the V-SPC from the recognized V-SLC, transmits the received IP address and port number information of the V-SPC to the target SET, and then, releases the TCP connection with the target SET. Then, the target SET directly sets the SUPL session with the V-SPC corresponding to the received IP address and the port number, and then, when the procedure for calculating the location of the target SET is performed, the V-SPC releases the TCP connection with the target SET. In this manner, in the present invention, after the TCP connection is established between the target SET and the H-SLC and then released, the TCP connection between the target SET and the V-SPC is established and then released. Thus, the target SET does not need to simultaneously maintain both TCP connections and the positioning procedure can be performed through the direct connection between the target SET and the V-SPC.

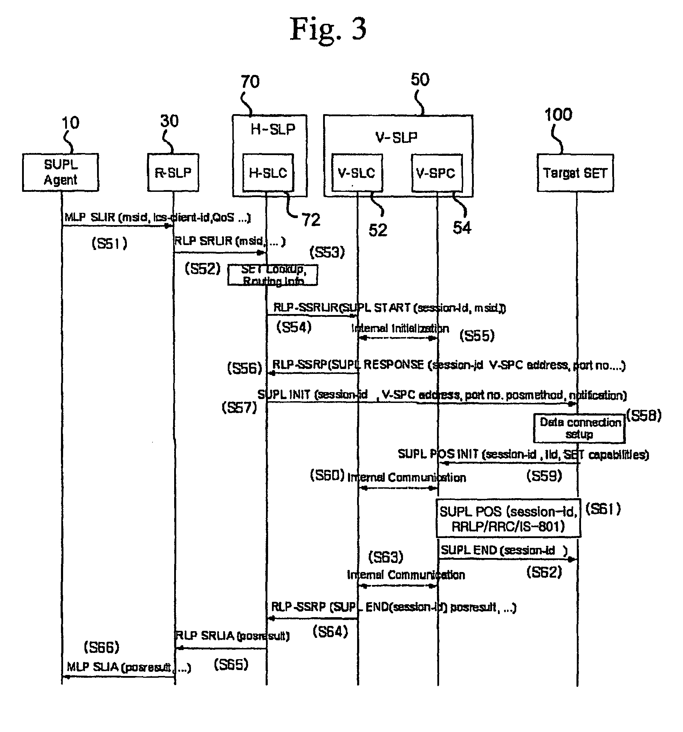

Figure 3 illustrates another example of a SUPL roaming method wherein a SLP of the network starts a SUPL procedure in accordance with the present invention.

With reference to Figure 3, the target SET 100 performs a direct connection with the V-SPC 54 which may perform the actual location calculation function, the target SET 100 and the V-SPC 54 perform a location calculation procedure of the target SET 100, and the V-SPC 54 exchanges required information with the V-SLC 52 which performs the roaming and resource management functions through internal communication.

Referring to Fig. 3, the steps S51 and S52 are the same as the steps S31 and S32 of Fig. 2, and thus the detailed descriptions of the step S51 and S52 are omitted. When a RLP SRLIR message is received from the R-SLP 30, the H-SLC 72 checks whether the target SET 100 corresponding to an ms-id received from the R-SLP 30 belongs to a roaming service area by using routing information, and checks whether the target SET 100 supports the SUPL function or not through a SET lookup table (step S53). The H-SLC 72 manages the routing information for determining whether the target SET 100 belongs to a roaming service area or not, and the SET lookup table for determining whether the SUPL function is supported or not by the current target SET 100.

If it is determined that the target SET 100 belongs to the roaming service area and supports the SUPL function, the H-SLC 72 recognizes the V-SLC 52 to which the target SET 100 belongs by using the routing information and transmits the SUPL START message to the V-SLC 52 through the RLP SSRLIR (Standard SUPL Roaming Location Immediate Request) message (step S54). The SUPL START message includes a session-id of the SUPL session and an ID (msid) of the target SET 100.

The V-SLC 52 informs that a location calculation procedure (SUPL POS procedure: positioning procedure) preparation will start through internal initialization with the corresponding V-SPC 54, and transmits information required for the location calculation procedure preparation included in the RLP-SSRLIR message to the V-SPC 54. Then, the V-SPC 54 recognizes positioning method(s) supported by the target SET 100 based on the information received from the V-SLC 52 and provides the IP address and the port number of the V-SPC 54 to the V-SLC 52 (step S55). Then, the V-SLC 52 transmits a RLP-SSRP (Standard SUPL Roaming Position) (RLP-SSRLIA) message to the H-SLC 72 as a response (answer) to the RLP-SSRLIR message (step S56). The RLP-SSRP message includes the session-id and the address of the V-SPC 54. In an example, the RLP-SSRP message includes the session-id, and the IP address and the port number of the V-SPC 54.

Then, the H-SLP 70 transmits a SUPL INIT message to the target SET 100 to start the SUPL procedure (step S57). The SUPL INIT message includes at least the IP address and the port number of the V-SPC 54 received from the V-SLC 52, the session-id, and a positioning method (posmethod) parameter to be used. In addition, if a notification related to the location information is required for the target SET 100 for privacy of the target SET 100, the SUPL INIT message can include a notification parameter.

The target SET 100 recognizes the V-SPC 54 corresponding to the IP address and the port number included in the SUPL INIT message received from the H-SLC 72 and prepares for establishing a TCP connection with the recognized V-SPC 54 (step S58). Namely, after receiving the SUPL INIT message, the target SET 100 checks whether a packet data network and a data connection have been currently set and established. If the data connection has not been established, the target SET 100 sets up a data connection with the packet data network such as 3GPP or 3GPP2.

Thereafter, the target SET 100 establishes the TCP connection with the recognized V-SPC 54 and transmits a SUPL POS INIT message to the V-SPC 54 (step S59). The SUPL POS INIT message includes a session-id of the established TCP connection, an ID (lid) of the base station to which the target SET 100 belongs, and SET capabilities (parameter for indicating capability related to the positioning method supported by the target SET 100). Then, a positioning procedure for calculating a location of the target SET 100 starts between the target SET 100 and the V-SPC 54.

Thereafter, the steps S60-S66 of performing the positioning procedure through the direct TCP connection between the target SET 100 and the V-SPC 54, releasing the TCP connection, and transmitting the calculated location information of the target SET 100 to the SUPL agent 10 are performed. Since these steps S60-S66 are the same as the steps S42-S48 as shown in Figure 2, the description thereof is omitted.

Thus, in performing the procedure for calculating the location of the target SET through the direct connection between the target SET and the V-SPC, when the SLP of the network starts the SUPL procedure, the SLP of the network side (namely, the H-SLP and the H-SLC) informs the V-SLC that the SUPL POS procedure preparation will start, instead of establishing the TCP connection with the target SET (between the target SET and the H-SLP). Then, the V-SLC provides the IP address and the port number information of the V-SPC received from the V-SPC through internal communication to the H-SLC. The H-SLC starts the SUPL procedure by transmitting the received IP address and the port number information of the V-SPC to the target SET. That is, in the example of Fig. 3, the first TCP connection between the H-SLP and the target SET discussed in the steps S13 and S34 of Figs. 1 and 2 is not established at all.

Then, the target SET directly establishes a TCP connection with the V-SPC corresponding to the received IP address and the port number, and when the procedure for calculating the location of the target SET is performed through the SUPL session, the V-SPC releases its TCP connection with the target SET.

In this manner, in the present invention, the address information of the V-SPC is obtained through the RLP communication between the H-SLC and the V-SLC, the obtained address of the V-SPC is transmitted from the H-SLC to the target SET, and then a TCP connection between the target SET and the V-SPC is opened and then released. Thus, the target SET does not need to simultaneously maintain multiple TCP connections and the positioning procedure can be performed through the direct connection between the target SET and the V-SPC.

In the example of Fig. 3, although not shown, certain security measures or authentication procedures may be performed between the target SET and the H-SLP through an IP connection.

Figure 4 illustrates a SUPL roaming method when a target SET starts a SUPL procedure in accordance with an embodiment of the present invention.

Referring to Fig. 4, when the target SET 100 requests location information, the target SET 100 transmits a SUPL START message for starting a SUPL procedure to the H-SLP 70 (step S71). The SUPL START message includes a SUPL session ID (session-id), capabilities (SET capabilities) of the target SET 100 (parameter(s) for indicating capability related to the positioning method supported by the target SET 100), a location identifier (lid), a system ID, QoS, a msid (ID of the target SET 100), etc.

At this time, a TCP connection corresponding to the SUPL session ID is established between the target SET 100 and the H-SLP 70.

The H-SLP 70 checks the system ID included in the SUPL START message transmitted from the target SET 100 to determine a V-SLP for the target SET 100, and transfers the SUPL START message to the determined V-SLP 50 through a RLP SSRLIR message (step S72). That is, the H-SLP 70 generates and transmits the RLP SSRLIR message to the V-SLP 50, and the RLP SSRLIR message includes the session-id, the msid, and the SUPL START message (supl start), etc.

The V-SLP 50 recognizes positioning method(s) supported by the target SET 100 by examining the RLP SSRLIR message and transmits a RLP SSRP (RLP SSRLIA) message to the H-SLP 70 as a response (answer) message to the RLP SSRLIR message (step S73). The RLP SSRP message includes the IP address and port number of the V-SLP 50, the session-id, etc.

The H-SLP 70 adds the SUPL session ID (session-id) and the IP address and the port number of the V-SLP 50 received from the V-SLP 50 in the SUPL RESPONSE message, and transmits this SUPL RESPONSE message to the target SET 100 (step S74).

Then, the target SET 100 releases every resource including the TCP connection with the H-SLP 70. In this case, the SUPL RESPONSE message serves substantially as a SUPL END message and can be substituted as the SUPL END message. In case of the SUPL END message transmitted by the H-SLP 70 to the target SET 100 to release the TCP connection between the H-SLP 70 and the target SET 100, the SUPL END message must include at least the IP address and the port number of the V-SLP 50 and the ID of the SUPL session.

The target SET 100 recognizes the V-SLP corresponding to the IP address and the port number, and transmits a SUPL POS INIT message to the recognized V-SLP 50 (step S75). At this time, the TCP connection is established between the target SET 100 and the V-SLP 50, and a substantial positioning procedure for calculating the location of the target SET 100 starts. The SUPL POS INIT message includes the session-id, lid, SET capabilities, etc.

Then the target SET 100 and the V-SLP 50 continuously exchange the messages to calculate the location information of the target SET 100. The V-SLP 50 or the target SET 100 calculates the location of the target SET 100 through the continuously exchanged messages for positioning (step S76). As a result, the V-SLP 50 obtains the calculated location information of the target SET 100.

When the location of the target SET 100 is obtained, the V-SLP 50 transmits the calculated location information (posresult) of the target SET 100 by transmitting a RLP SSRP message to the H-SLP 70 (step S77), and the V-SLP 50 transmits a SUPL END message to the target SET 100 to inform about the termination of the SUPL procedure (step S78). The order of performing the steps S77 and S78 does not matter. The SUPL END message includes the session ID for releasing the TCP connection established between the target SET 100 and the V-SLP 50. Accordingly, the target SET 100 releases the TCP connection opened with the H-SLP 70 to terminate the SUPL procedure.

Accordingly, in the SUPL roaming method of Fig. 4, when the target SET starts the SUPL procedure, it establishes a TCP connection with the H-SLP, receives the IP address and the port number of the V-SLP from the H-SLP, and then releases the TCP connection with the H-SLP. Then, another TCP connection is established between the V-SLP corresponding to the received IP address and the port number and the target SET to calculate the location of the target SET, and thereafter the V-SLP releases the TCP connection with the target SET. Therefore, the target SET can receive the SUPL service without having to simultaneously maintain two TCP connections.

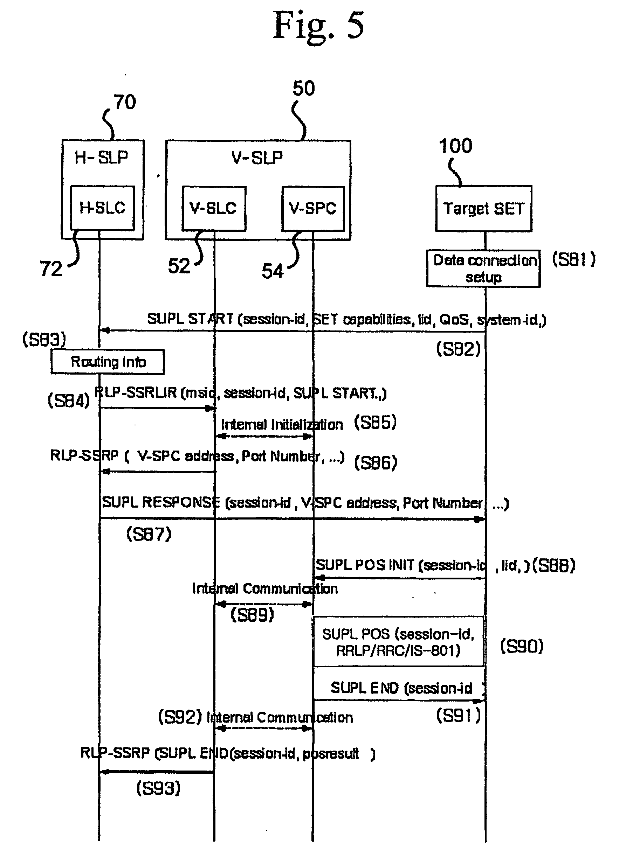

Figure 5 illustrates one example of the SUPL roaming method of Fig. 4 with details in accordance with the present invention, wherein the target SET 100 requests a SUPL service.

Referring to Fig. 5, the target SET 100 establishes a direct connection with the V-SPC 54 which may perform an actual location calculation function. The target SET 100 and the V-SPC 54 performs a procedure for calculating the location the target SET 100. The V-SPC 54 exchanges required information through internal communication with the V-SLC 52 which performs the roaming and resource management functions.

Before transmitting a SUPL START message for starting a SUPL procedure, the target SET 100 checks whether a data connection with a packet data network has been set. If the data connection has not been set, the target SET 100 sets up a data connection with the packet data network such as 3GPP or 3GPP2 (step S81).

And then, the target SET 100 transmits the SUPL START message to the H-SLC 72 to start the SUPL procedure (step S82). The SUPL START message includes at least a session ID of a SUPL session for starting the SUPL procedure, capabilities (SET capabilities) of the target SET 100 (parameter(s) for indicating capability related to a positioning method supported by the target SET 100), a location identifier (lid), a system ID and QoS. In this case, the TCP connection corresponding to the SUPL session ID is established between the target SET 100 and the H-SLP 70.

The H-SLC 72 manages routing information with respect to each target SET. The H-SLC 72 checks whether the current target SET 100 is located in a roaming service area (visited network area) or not by using the routing information (step S83). If the target SET 100 is located in the roaming service area, the H-SLC 72 transmits a RLP SSRLIR message to the V-SLC 52 based on the system ID included in the received SUPL START message (step S84). The RLP SRLIR message includes at least an ID (msid) of the target SET 100, a session-id and the SUPL START message.

The V-SLC 52 informs that a SUPL POS procedure (positioning procedure) preparation will start through internal initialization and transmits information required for the location calculation procedure preparation included in the RLP-SSRLIR message to the V-SPC 54. Then, the V-SPC 54 recognizes positioning method(s) supported by the target SET 100 based on the information received from the V-SLC 52 and provides an IP address and a port number of the V-SPC 54 to the V-SLC 52 (step S85).

Then, the V-SLC 52 transmits a RLP-SSRP (RLP-SSRLIA) message to the H-SLC 72 as a response (answer) to the RLP-SSRLIR message (step S86). The RLP-SSRP message includes at least the IP address and the port number of the V-SPC 54.

Then, the H-SLC 72 transfers the IP address and the port number of the V-SPC 54 provided from the V-SLC 52, the session-id of the TCP connection for releasing its TCP connection with the target SET 100, and the like, to the target SET 100 through a SUPL RESPONSE message (step S87). Then, the target SET 100 releases every resource for the TCP connection with the H-SLC 72 and thereby releases its TCP connection with the H-SLC 72.

Thereafter, the target SET 100 establishes a TCP connection with the V-SPC 54 corresponding to the received IP address and the port number, and transmits a SUPL POS INIT message to the V-SPC 54 (step S88). The SUPL POS INIT message includes the session-id of the established TCP connection, a base station ID (lid) in which the target SET 100 is located, etc.

Then, a positioning process for calculating the location of the target SET 100 starts between the target SET 100 and the V-SPC 54 and the steps S89-S93 are performed. Operations with respect to the steps S89-S93 are the same as the operations with respect to the steps S42-S46 of Figure 2 and thus the discussion thereof is omitted.

Accordingly, in performing the procedure for calculating the location of the target SET through the direct connection between the target SET and the V-SPC, when the target SET starts the SUPL procedure, the target SET establishes a TCP connection with the H-SLC, the H-SLC receives the address of the V-SPC from the V-SLC, the H-SLC transmits the address of the V-SPC to the target SET through the established TCP connection, and then the established TCP connection between the target SET and the H-SLC is released. Then, the target SET establishes a direct TCP connection with the V-SPC corresponding to the received address of the V-SPC, and when the procedure for calculating the location of the target SET is performed through the TCP connection, the V-SPC releases the TCP connection with the target SET. Thus, in the present invention, after the first TCP connection between the target SET and the H-SLC is established and released, the second TCP connection between the target SET and the V-SPC is established and then released. Accordingly, the target SET does not need to simultaneously maintain the two TCP connections, and the positioning calculation procedure can be performed through the direct connection between the target SET and the V-SPC.

In all the embodiments of the present invention, all or some of the contents of each message (e.g., SUPL START, RLP SSRLIR, RLP SSRP, SUPL RESPONSE, SUPL INIT, SUPL POS INIT, ...) communicated between components have been shown and discussed above. However, it should be understood that each such message may include other information or data, although not specifically mentioned.

The processing steps of the present methods are implementable with one or more computer processors capable of executing computer program codes/instructions. Such computer program codes may be embodied on one or more computer-readable mediums provided in or associated with any component of the system, such as the target SET, the H-SLP, the V-SLP, the R-SLP, etc, and ca be written in known computer program languages.

As so far described, in the present invention, the SLP of the visited network manages the positioning function for calculating the location of the target terminal (target SET) and also performs the resource management function for setting and releasing the SUPL session. Thus, until the SUPL procedure is completely performed, the target terminal does not need to simultaneously maintain both the TCP connection with the home network and the TCP connection with the visited network. Therefore, singling burden of the target terminal can be reduced.

Furthermore, since in some embodiments the first TCP connection between the target terminal and the home network is not even opened, the number of TCP connections needed to be established in the SUPL system is reduced, which simplifies the system.

In addition, since the SLP of the home network does not need to maintain the TCP connection between the target terminal and the home network until the SUPL procedure for calculating the location of the target terminal, use efficiency of the TCP resource of the home network can be enhanced.

Moreover, the target terminal can set the direct connection with the V-SPC without passing through the V-SLC which serves as the proxy entity to calculate the location of the target terminal, signaling burden of the network can be reduced.

The foregoing embodiments and advantages are merely exemplary and are not to be construed as limiting the present invention. The present teaching can be readily applied to other types of apparatuses. The description of the preferred embodiments of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A method of obtaining position information of a target terminal (100), the method being performed by the target terminal and comprising:
sending (S82) a start message to a home network (H-SLP 70);
receiving (S87) a response message from the home network, the response message containing address information of a visited network (V-SLP 50);
sending (S88) a positioning initiation message to the visited network using the address information in the response message; and
performing (S90) a positioning procedure with the visited network,
wherein the positioning procedure is performed while there is no connection with the home location server.

2. The method of claim 1, wherein the start message comprises a session identification (session-id), a location identifier (lid) and capabilities of the target terminal (SET capabilities).

3. The method of claim 1, wherein the received response message further comprises a session identification (session id) and an address of a visited SUPL positioning center (V-SPC 54).

4. The method of claim 1, further comprising:
sending (S88), before performing the positioning procedure, a SUPL POS INT message to the visited network in order to start a SUPL positioning session with the visited network; and
receiving (S91), after performing the positioning procedure, a SUPL END message from the visited network informing that the SUPL positioning session is finished.

5. The method of claim 1, further comprising releasing a connection between the target terminal and the home network before performing a positioning procedure with the visited network.

6. A method of obtaining position information of a target terminal (100), the method being performed by a home network (H-SLP 70) and comprising:
receiving (S82) a start message from the target terminal;
obtaining (S83, S84, S85, S86) address information of a visited network;
sending (S87) a response message to the target terminal, the response message containing address information of the visited network; and
receiving (S93) a message from the visited network with position information of the target SET,
wherein a positioning of the target SET is performed without connection between the home network and the target terminal.

7. The method of claim 6, wherein the start message comprises a session identification, a location identifier and capabilities of the target terminal.

8. The method of claim 6, wherein the response message further comprises a session identification and a V-SPC address.

9. The method of claim 6, wherein the visited network comprises a V-SLP (70) having a visited SUPL location center (V-SLC 52) and a visited SUPL positioning center (V-SPC 54), and the method further comprises:
prior to sending a response message, transmitting (S84) a RLP (roaming location protocol) SSRLIR (standard SUPL roaming location immediate request) message from the home network to the V-SLC, the RLP SSRLIR message including a session identification and an identification of the target terminal.

10. The method of claim 9, further comprising:
receiving (S86) a RLP response message from the V-SLC, the RLP response message including the session identification, the address of the V-SPC, and the port number in response to the transmitted RLP SSRLIR message.

11. A secure user plane location (SUPL) enabled terminal (100) comprising:
a transceiver to transmit and receive information; and
at least one processor cooperating with the transceiver and configured:
- to send (S82) a start message to a home network (H-SLP 70);
- to receive (S87) a response message from the home network, the response message containing address information of a visited network (V-SLP 50);
- to send (S88) a positioning initiation message to the visited network using the address information in the response message; and
- to perform (S90) a positioning procedure with the visited network
wherein the processor is further configured for not maintaining a connection between the target terminal and the home location server when said positioning procedure is performed.

12. The terminal of claim 11, further configured to send a start message comprising a session identification (session-id), a location identifier (lid) and capabilities of the target terminal (SET capabilities).

13. The terminal of claim 11, wherein the received response message further comprises a session identification (session id) and an address of a visited SUPL positioning center (V-SPC 54).

14. The terminal of claim 11, further configured:
- to send (588), before performing the positioning procedure, a SUPL POS INT message to the visited network in order to start a SUPL positioning session with the visited network; and
- to receive (S91), after performing the positioning procedure, a SUPL END message from the visited network informing that the SUPL positioning session is finished.

15. The method of claim 11, further configured to release a connection between the target terminal and the home network before performing a positioning procedure with the visited network.
